# EUROPÄISCHE PATENTSCHRIFT

(11) **EP 1 531 459 B1**
(45) Veröffentlichungstag und Bekanntmachung des Hinweises auf die Patenterteilung: **08.10.2008**
(21) Anmeldenummer: 04105478.4
(22) Anmeldetag: 03.11.2004
(51) Int. Cl.: G10L 17/00, G07C 9/00

(54) **Verfahren zur Authentifizierung eines Benutzers anhand dessen Stimmprofils**
Method for voice-based user authentication
Procédé pour l'authentification d'un utilisateur au moyen de sa voix

(30) Priorität: 13.11.2003 DE 10353068
(43) Veröffentlichungstag der Anmeldung: 18.05.2005
(73) Patentinhaber: VOICE.TRUST AG, 80637 München (DE)
(72) Erfinder: Geupel, Hermann, 81925, München (DE)
(74) Vertreter: Kehl, Günther

(56) Entgegenhaltungen:
- EP-A- 1 074 974
- EP-A- 1 271 908
- WO-A-03/075540
- GB-A- 2 401 209
- US-B1- 6 182 076

## Beschreibung

Die vorliegende Erfindung betrifft ein Verfahren zur Authentifizierung eines Benutzers anhand dessen Stimmprofils, insbesondere mit Einsatz eines Mobiltelefons. Ferner betrifft die Erfindung eine SIM-Karte zur Steuerung eines derartigen Verfahrens.

Sprachportale gewinnen zunehmend an Bedeutung. Durch die Weiterentwicklung der Spracherkennungstechnik und durch den Wettbewerb auf diesem Sektor werden Call-Center-Dienste zunehmend automatisiert. Banken bieten Kontostandsauskünfte, Aktienhandel und Überweisungen via Sprachportal an. Telekommunikationsanbieter machen das Internet via sogenanntes VoiceXML über Sprache zugänglich. Für viele Dienste muss der Benutzer vorher seine Identität nachweisen, d.h. sich authentifizieren. Die konventionelle Authentifizierung über eine üblicherweise als PIN (Personal Identifikation Number) bezeichnete Geheimzahl bzw. ein Passwort bereitet insbesondere dann Probleme, wenn der Dienst nicht häufig genutzt wird, der Benutzer seine PIN vergisst und infolgedessen den Dienst nicht oder - wegen umständlicher PIN-Reset-Prozeduren - ungern nutzt. Ferner besteht das nicht unerhebliche Sicherheitsrisiko, daß ein unberechtigter Dritter die PIN ausspäht, und sich anstelle des Berechtigten Benutzers Zugang zu Diensten der oben genannten Art verschafft. Deshalb beginnen Sprachdiensteanbieter, den Benutzer über dessen Stimmprofil zu authentifizieren. Diese Form der Authentifizierung, nachfolgend als Stimmauthentifizierung bezeichnet, liegt auch unter Aspekten der Nutzerakzeptanz nahe. Der Benutzer braucht sich keine geheimen Daten zu merken. Er wird im Gespräch mit dem Sprachcomputer, das er sowieso führt, durch einen kurzen Authentifizierungsdialog geführt und bekommt abhängig vom Ergebnis der Grundsätzlich besteht die Möglichkeit, für die Nutzung der Sprachdienste und eine damit verbundene Stimmauthentifizierung das Mobilfunk-Endgerät (Handset) zu verwenden, über das ein Benutzer für gewöhnlich verfügt. Diese Anwendung ist z.B. aus der Druckschrift WO03/ 075540 bekannt, welche ein Verfahren zur sicheren so genannten "multi-faktor" Authentifizierung beschreibt. Die Stimmauthentifizierung in ein einem Mobilfunknetz wird dabei als einer von mehreren Faktoren für besagte multi-faktor" Authentifizierung des Benutzers herangezogen.

Allen bisher bekannten Verfahren gemein ist jedoch die Beschränkung durch die Verwendung des Mobilfunk-Sprachkanals als Übertragungsweg. Der Mobilfunk garantiert allerdings keine einheitliche Sprachübertragungsqualität. Bei schwacher Feldstärke können Stimmen verzerrt und Störgeräusche erzeugt werden. Die Stimmerkennung, d.h. die Überprüfung charakteristischer Stimmerkmale für die Authentifizierung, reagiert darauf empfindlicher als die Spracherkennung, d.h. die Erkennung der gesprochenen Information. Feldtests zeigen eine relativ hohe sogenannte False Rejection Rate (fälschliche Abweisung eines authentischen Nutzers) in Mobilfunknetzen, wodurch der Einsatz von Mobilfunk-Ehdgeräten für die Stimmauthentifizierung generell in Frage gestellt ist.

Neben dem üblichen Ansatz, ein Stimmprofil des Benutzers anbieterseitig aus dem übertragen Sprachsignal zu gewinnen und mit dem Referenz-Stimmprofil des Benutzers zu vergleichen, ist noch der Ansatz bekannt, das Referenz-Stimmprofil auf der SIM-Karte des Mobilfunk-Endgeräts abzulegen und den Überprüfungsalgorithmus auf eben dieser SIM-Karte ablaufen zu lassen. Mit dem gängigen Speicherplatz auf SIM-Karten muss man allerdings starke Einbußen hinsichtlich der Güte des Referenz-Stimmprofils und des Überprüfungsalgorithmus hinnehmen, welche wiederum zu hohen Fehlerraten führen und daher einen praktischen Einsatz grundsätzlich in Frage stellen.

Die Druckschrift EP 1 074 974 A2) offenbart, neben der Übermittlung einer der Authentifizierung dienenden Stimmprobe von einem Mobiltelefon aus als gewöhnliches Telefonsignal, eine solche Stimmprobe bereits im Telefongerät selbst zu analysieren, d.h. spektrale und temporale Charakteristika zu extrahieren, und diese dann entweder als Datenstrom zu übertragen oder die Authentifizierung gleich im Mobiltelefon vorzunehmen. Beide Ansätze sind problematisch. Die Übertragung (parametrisierter) spektraler und temporaler Charakteristika erfordert die Kompatibilität der Stimmanalyseeinrichtung im Mobiltelefon mit dem System, welches den Vergleich der übermittelten Charakterisitika mit gespeicherten Vergleichsdaten vornimmt. Mit anderen Worten sind die im Mobiltelefon errechneten Charakteristika abhängig von den verwendeten propietären Stimmauthentifizierungsalgorithmen und können nur bei Verwendung der gleichen proprietären Technik im Backendsystem (z.B. überprüfende Bank) ausgewertet werden. Bei der Authentifizierung im Telefon muß dieses aufwendig für die geräteseitige Authentifizierung ausgestattet sein. Der Nutzer ist gezwungen ein geeignet ausgestattetes Telefon zu erwerben, anstatt aus dem breiten Angebot aller Mobilitelefone wählen zu können. Zudem bietet die endgerätseitige Authentifizierung mehr Manipulationsmöglichkeiten.

Da die Nutzbarkeit von Sprachdiensten auch von unterwegs aus sowohl für Benutzer als auch für Anbieter von großem Interesse ist, liegt angesichts der beschriebenen Probleme herkömmlicher Technologie der Erfindung die Aufgabe zugrunde, ein Verfahren zu schaffen, welches den Einsatz eines Mobiltelefons bei der Stimmauthentifizierung mit gegenüber dem Stand der Technik stark erhöhter Zuverlässigkeit gestattet. Das Verfahren soll kostengünstig umsetzbar sein und den Benutzer vor umfangreicheren und teuren Hardware-Anschaffungen bewahren. Dementsprechend ist es ferner Aufgabe der Erfindung, geeignetes Zubehör zu schaffen, welches die Ausführung eines derartigen Verfahrens mit Hilfe eines handelsüblichen Mobiltelefons ermöglicht.

Gemäß einem Aspekt der vorliegenden Erfindung wird die Aufgabe mit einem Verfahren nach Patentanspruch 1 gelöst. Vorteilhafte Ausführungsformen des Verfahrens können gemäß den Ansprüchen 2-8 ausgestaltet sein.

Gemäß einem weiteren Aspekt der vorliegenden Erfindung wird die Aufgabe mit einer SIM-Karte gemäß Patentanspruch 9 gelöst. Auf für den Fachmann überraschende Weise läßt sich somit ein handelsübliches Mobiltelefon durch bloßen Austausch der SIM-Karte oder durch Nachladen der Karten-Software am Verkaufsort (Point-of-Sale) oder drahtlos ("Over-the-Air") derart umrüsten, daß die Fehleranfälligkeit bei der Stimmauthentifizierung gegenüber dem Stand der Technik um Größenordnungen vermindert ist. Vorteilhafte Ausführungsformen der erfindungsgemäßen SIM-Karte können gemäß den Ansprüchen 10-13 gestaltet sein.

Die Erfindung basiert darauf, daß die zur Authentifizierung genutzte Stimmaufzeichnung nicht über den Sprachkanal, sondern über einen Datenkanal zum Sprachportal des Dienste-Anbieters übertragen wird. Die Stimmaufzeichnung wird dabei nicht synchron zum Sprechen und verlustbehaftet sondern asynchron und verlustfrei in einem extra Datenpaket - vorteilhafterweise z.B. als MMS-Datenpaket - übertragen. Hierbei können in den meisten Mobilfunk-Endgeräten serienmäßig vorhandene Ressourcen wie die digitale Sprachaufzeichnung und der MMS-Versand genutzt werden. Vorzugsweise kann die SIM-Karte im Mobilfunk-Endgerät das entsprechende Steuerungsprogramm speichern und ausführen.

Das erfindungsgemäße Verfahren bietet den Vorteil, die zur Stimmauthentifizierung nötige Stimmprobe verlustfrei über das Mobilfunknetz schicken zu können. Übertragungsbedingte Fehler bei der Authentifizierung sind so weitgehend ausgeschlossen. Da bei der Festlegung der Toleranz des eigentlichen Authentifizierungsvorgangs keine übertragungsbedingten Signalstörungen mehr berücksichtigt werden müssen, kann die einen Zugang erlaubende Schwelle der notwendigen Übereinstimmung zwischen Stimmprobe und Referenz-Stimmprofil heraufgesetzt werden, wodurch sich die die erreichbare Sicherheit erhöhen läßt.

Das erfindungsgemäße Verfahren bietet weiterhin überraschenderweise einen Lösungsansatz für die in der Stimmauthentifizierungs-Branche viel diskutierte Cross-Channel-Problematik. Darunter ist zu verstehen, dass die Merkmale der Übertragungsstrecke zwischen Benutzer und Sprachserver - das Mikrophon, das Telefongerät, der Übertragungskanal etc. - die Stimmaufzeichnung verzerren. Wenn sich die Bedingungen bei der Aufzeichnung des Referenz-Stimmprofils von denen bei der Aufzeichnung einer Stimmprobe im Rahmen eines Authentifizierungsvorgangs unterscheiden, wird die Stimme unterschiedlich verzerrt, was zu höheren Fehlerraten führen kann. Durch eine durchgehende Nutzung des eigenen Mobilfunk-Endgeräts nach dem erfindungsgemäßen Verfahren wird eine gleichbleibende, verlustfreie Stimmübertragung ohne Cross-Channel-Effekte gewährleistet. Hilfreich ist hierbei, wenn der Benutzer für die Aufzeichnung des Referenz-Stimmprofils - dem sogenannten Enrollment - das gleiche Mobilfunk-Endgerät verwendet, wie für spätere Authentifizierungen. Wenn der Benutzer das Mobilfunkendgerät wechselt, ist unter Umständen im Sinne niedriger Fehlerraten ein neues Enrollment ratsam.

Wenn der Sprachserver zur Erreichung geringerer Fehlerraten vom Benutzer mehrere Stimmproben nacheinander abfragt, kann der Versand der Stimmprobe vom mobilen Endgerät zum Sprachserver zeitlich parallel zum fortgesetzten Dialog zwischen Sprachserver und Benutzer stattfinden. Dadurch lässt sich beim Benutzer eine mögliche Wartezeit vermeiden oder verkürzen.

Das erfindungsgemäße Verfahren bietet die Möglichkeit, das Mobilfunk-Endgerät als biometrischen Sensor in verschiedenste Authentifizierungsumgebungen einzubinden. Beispiele sind das Zurücksetzen von Passwörtern, sicherheitsempfindliche Sprachportaldienste, zusätzliche oder alternative Authentifizierungen für Datenzugriffe über das Internet. Ferner ist der Einsatz für behördliche Zwecke als Alternative/Zusatz zum Fingerabdruck denkbar. Ein Stimmprofil bietet eine vergleichsweise höhere Genauigkeit und erlaubt beim Nachsprechen zufällig ausgewählter Begriffe einen Lebendtest, d.h. eine Gewähr dafür, daß keine vor dem einzelnen Authentifizierungsvorgang beschaffte Aufzeichnung verwendet wird.

Eine besonders bevorzugte Ausführungsform der Erfindung wird nachfolgend kurz im Detail beschrieben.

Ein Benutzer, welcher einen bestimmten Dienst über sein Mobiltelefon nutzen möchte, wählt das entsprechende Sprachportal des Dienste-Anbieters an. Nach Herstellung der Verbindung wird vom Sprachportal aus ein Authentifizierungsdialog begonnen. Zur Aufzeichnung einer der Authentifizierung des Benutzers dienenden Stimmprobe wird ein entsprechendes Steuerprogramm über einen Mobilfunk-Datenkanal vom Sprachportal aus sicher - vorteilhafterweise z.B. über eine SSL-Verbindung, SSLartige Verbindung oder ähnliche Verbindung - gestartet. Diese Verbindung zeichnet sich vorzugsweise jedenfalls dadurch aus, dass sie verringerte Bandbreiten des Übertragungskanals nicht durch zeitverzögerungsfreie verlustbehaftete Komprimierung, sondern durch Verlängerung der benötigten Übertragungszeit bei Verzicht auf verlustbehaftete Übertragungsverfahren ausgleicht. Über ein festgelegtes Zeitfenster von vorzugsweise mindestens einer Sekunde, besonders bevorzugt zwischen zwei und sechs Sekunden, idealerweise etwa zwei Sekunden Länge wird eine Stimmprobe des Benutzers im Mobilfunkendgerät aufgezeichnet, vorzugsweise digital signiert und vorzugsweise als MMS-Nachricht an das Sprachportal geschickt. Dort wird die Stimmprobe mit einem hinterlegten Referenz-Stimmprofil des Benutzers verglichen und über den Zugang zum Dienst (z.B. Sprachdienst) entschieden, wobei bekannte, gängige Stimmerkennungs- bzw. Stimmvergleichs-Algorithmen Verwendung finden können. Innerhalb von wenigen Sekunden ist der Benutzer authentifiziert.

## Patentansprüche (Patentansprüche für folgende(n) Vertragsstaat(en): GB)

1. Verfahren zur Authentifizierung eines Benutzers anhand dessen Stimmprofils im Rahmen eines Sprachdialogs, welches folgende Schritte aufweist:
- Aufbau einer Sprachverbindung über ein Mobilfunknetz,
- Aufnahme einer Stimmprobe des Benutzers mittels eines Mikrofons eines mobilen Endgeräts,
- Übertragung der Stimmprobe asynchron zum Sprechen in Form mindestens eines separaten Datenpakets über das Mobilfunknetz zu einem Server,
- Überprüfung der Stimmprobe durch den Server.

2. Verfahren gemäß Anspruch 1, wobei das separate Datenpaket mit Hilfe einer Endgerätseitig implementierten Sprachaufzeichnungsfunktion erzeugt wird.

3. Verfahren gemäß einem der vorangehenden Ansprüche, wobei die Stimmprobe als MMS-Nachricht versandt wird.

4. Verfahren gemäß einem der vorangehenden Ansprüche, wobei die Aufnahme und Übertragung der Stimmprobe mittels der SIM-Karte des Endgeräts gesteuert wird.

5. Verfahren gemäß einem der vorangehenden Ansprüche, wobei die Aufnahme und Übertragung der Stimmprobe beginnt, nachdem sich der Server gegenüber dem Endgerät bzw. der SIM-Karte authentifiziert und die Aufnahme und Übertragung der Stimmprobe angewiesen hat.

6. Verfahren gemäß einem der vorangehenden Ansprüche, wobei das Datenpaket vor der Übertragung digital signiert wird.

7. Verfahren gemäß einem der vorangehenden Ansprüche wobei der Versand der Stimmprobe in Form des Datenpakets zeitlich parallel zum fortgesetzten Dialog zwischen Server und Benutzer stattfindet.

8. Verfahren gemäß einem der vorangehenden Ansprüche, wobei der Benutzer für die Aufnahme der Stimmprobe vom Server zur Abgabe einer Äußerung, welche ohne Einflußnahme des Benutzers aus einer Menge möglicher Äußerungen ausgewählt wird, aufgefordert wird.

9. SIM-Karte für ein Mobiltelefon, welche ein Steuerungsprogramm enthält, welches wirksam ist um die folgenden Schritte auszuführen:
- Aufbau einer Sprachverbindung über ein Mobilfunknetz,
- Aufnahme einer Stimmprobe des Benutzers des Mobiltelefons mittels eines Mikrofons des Mobiltelefons im Rahmen eines Sprachdialogs,
- Übertragung der Stimmprobe asynchron zum Sprechen in Form mindestens eines separaten Datenpakets über das Mobilfunknetz zu einem Server.

10. SIM-Karte gemäß Anspruch 9, wobei die Erzeugung des separaten Datenpaket mit Hilfe einer Mobiltelefon-seitig implementierten Sprachaufzeichnungsfunktion vorgesehen ist.

11. SIM-Karte gemäß einem der Ansprüche 9-10, wobei die Übertragung der Stimmprobe als MMS-Nachricht vorgesehen ist.

12. SIM-Karte gemäß einem der Ansprüche 9-11, wobei das Steuerungsprogramm durch Authentifizierung des Servers gegenüber der SIM-Karte und anschließende Anweisung der Aufnahme und Übertragung der Stimmprobe aktivierbar ist.

13. SIM-Karte gemäß einem der Ansprüche 9-12, wobei die SIM-Karte eine Funktion zum digitalen Signieren des Datenpakets aufweist.

## Patentansprüche (Patentansprüche für folgende(n) Vertragsstaat(en): AT, BE, BG, CH, CY, CZ, DE, DK, EE, ES, FI, FR, GR, HU, IE, IS, IT, LI, LU, MC, NL, PL, PT, RO, SE, SI, SK, TR)

1. Verfahren zur Authentifizierung eines Benutzers anhand dessen Stimmprofils, welches folgende Schritte aufweist:
- Aufbau einer Sprachverbindung über ein Mobilfunknetz,
- Aufnahme einer Stimmprobe des Benutzers mittels eines Mikrofons eines mobilen Endgeräts,
- Übertragung der Stimmprobe asynchron zum Sprechen in Form mindestens eines separaten Datenpakets über das Mobilfunknetz zu einem Server,
- Überprüfung der Stimmprobe durch den Server.

2. Verfahren gemäß Anspruch 1, wobei das separate Datenpaket mit Hilfe einer Endgerätseitig implementierten Sprachaufzeichnungsfunktion erzeugt wird.

3. Verfahren gemäß einem der vorangehenden Ansprüche, wobei die Stimmprobe als MMS-Nachricht versandt wird.

4. Verfahren gemäß einem der vorangehenden Ansprüche, wobei die Aufnahme und Übertragung der Stimmprobe mittels der SIM-Karte des Endgeräts gesteuert wird.

5. Verfahren gemäß einem der vorangehenden Ansprüche, wobei die Aufnahme und Übertragung der Stimmprobe beginnt, nachdem sich der Server gegenüber dem Endgerät bzw. der SIM-Karte authentifiziert und die Aufnahme und Übertragung der Stimmprobe angewiesen hat.

6. Verfahren gemäß einem der vorangehenden Ansprüche, wobei das Datenpaket vor der Übertragung digital signiert wird.

7. Verfahren gemäß einem der vorangehenden Ansprüche wobei der Versand der Stimmprobe in Form des Datenpakets zeitlich parallel zum fortgesetzten Dialog zwischen Server und Benutzer stattfindet.

8. Verfahren gemäß einem der vorangehenden Ansprüche, wobei der Benutzer für die Aufnahme der Stimmprobe vom Server zur Abgabe einer Äußerung, welche ohne Einflußnahme des Benutzers aus einer Menge möglicher Äußerungen ausgewählt wird, aufgefordert wird.

9. SIM-Karte für ein Mobiltelefon, welche ein Steuerungsprogramm enthält, welches wirksam ist um die folgenden Schritte auszuführen:
- Aufbau einer Sprachverbindung über ein Mobilfunknetz,
- Aufnahme einer Stimmprobe des Benutzers des Mobiltelefons mittels eines Mikrofons des Mobiltelefons,
- Übertragung der Stimmprobe asynchron zum Sprechen in Form mindestens eines separaten Datenpakets über das Mobilfunknetz zu einem Server.

10. SIM-Karte gemäß Anspruch 9, wobei die Erzeugung des separaten Datenpaket mit Hilfe einer Mobiltelefon-seitig implementierten Sprachaufzeichnungsfunktion vorgesehen ist.

11. SIM-Karte gemäß einem der Ansprüche 9-10, wobei die Übertragung der Stimmprobe als MMS-Nachricht vorgesehen ist.

12. SIM-Karte gemäß einem der Ansprüche 9-11, wobei das Steuerungsprogramm durch Authentifizierung des Servers gegenüber der SIM-Karte und anschließende Anweisung der Aufnahme und Übertragung der Stimmprobe aktivierbar ist.

13. SIM-Karte gemäß einem der Ansprüche 9-12, wobei die SIM-Karte eine Funktion zum digitalen Signieren des Datenpakets aufweist.

## Claims (Claims for the following Contracting State(s): AT, BE, BG, CH, CY, CZ, DE, DK, EE, ES, FI, FR, GR, HU, IE, IS, IT, LI, LU, MC, NL, PL, PT, RO, SE, SI, SK, TR)

1. A method for authentication of a user by a voice profile of the user, which comprises the following steps:
- establishing a voice connection via a mobile network;
- recording a voice sample of the user by means of a microphone of a mobile terminal;
- transmitting, asynchronous to speech, to a server the voice sample as at least one separate data package via the mobile network,
- checking the voice sample by means of the server.

2. The method as recited in claim 1, wherein the at least one separate data package is generated using a speech recognition function that is implemented at the mobile terminal.

3. The method as recited in one of the preceding claims, wherein the voice sample is sent as an MMS message.

4. [original] The method as recited in one of the preceding claims, wherein recording and transmission of the voice sample is controlled by means of a SIM card of the terminal.

5. The method as recited in one of the preceding claims, wherein recording and transmission of the voice sample begins after a service has authenticated itself to the terminal or the SIM card, and has instructed that the voice sample be recorded and transmitted.

6. The method as recited in one of the preceding claims, wherein the at least one data package is digitally signed before transmission.

7. The method as recited in one of the preceding claims, wherein sending of the voice sample as a data package takes place parallel in time with a continued dialog between the server and the user.

8. The method as recited in one of the preceding claims, wherein the user is prompted by the server, for the purpose of recording the voice sample, to make a statement that is, without interference by the user, selected from a number of possible statements.

9. A SIM card for a mobile phone, which contains a control program, which is effective to perform the following steps:
- establishing a voice connection via a mobile network;
- recording a voice sample of the user by means of a microphone of a mobile terminal;
- transmitting, asynchronous to speech, to a server the voice sample as at least one separate data package via the mobile network.

10. A SIM card as recited in claim 9, wherein generating the at least one separate data package is provided to use a speech recognition function that is implemented at the mobile terminal.

11. A SIM card as recited in one of claims 9-10, sending of the voice sample as an MMS message is provided.

12. A SIM card as recited in one of claims 9-11, wherein the control program can be activated by a server authenticating itself to the SIM card and then instructing that the voice sample be recorded and transmitted.

13. A SIM card as recited in one of claims 9-12, wherein the SIM card comprises a function for digitally signing the data data package.

## Claims (Claims for the following Contracting State(s): GB)

1. A method for authentication of a user by a voice profile of the user in the course of a speech dialogue, which comprises the following steps:
- establishing a voice connection via a mobile network;
- recording a voice sample of the user by means of a microphone of a mobile terminal;
- transmitting, asynchronous to speech, to a server the voice sample as at least one separate data package via the mobile network,
- checking the voice sample by means of the server.

2. The method as recited in claim 1, wherein the at least one separate data package is generated using a speech recognition function that is implemented at the mobile terminal.

3. The method as recited in one of the preceding claims, wherein the voice sample is sent as an MMS message.

4. [original] The method as recited in one of the preceding claims, wherein recording and transmission of the voice sample is controlled by means of a SIM card of the terminal.

5. The method as recited in one of the preceding claims, wherein recording and transmission of the voice sample begins after a service has authenticated itself to the terminal or the SIM card, and has instructed that the voice sample be recorded and transmitted.

6. The method as recited in one of the preceding claims, wherein the at least one data package is digitally signed before transmission.

7. The method as recited in one of the preceding claims, wherein sending of the voice sample as a data package takes place parallel in time with a continued dialog between the server and the user.

8. The method as recited in one of the preceding claims, wherein the user is prompted by the server, for the purpose of recording the voice sample, to make a statement that is, without interference by the user, selected from a number of possible statements.

9. A SIM card for a mobile phone, which contains a control program, which is effective to perform the following steps:
- establishing a voice connection via a mobile network;
- recording a voice sample of the user by means of a microphone of a mobile terminal in the course of a speech dialogue;
- transmitting, asynchronous to speech, to a server the voice sample as at least one separate data package via the mobile network.

10. A SIM card as recited in claim 9, wherein generating the at least one separate data package is provided to use a speech recognition function that is implemented at the mobile terminal.

11. A SIM card as recited in one of claims 9-10, sending of the voice sample as an MMS message is provided.

12. A SIM card as recited in one of claims 9-11, wherein the control program can be activated by a server authenticating itself to the SIM card and then instructing that the voice sample be recorded and transmitted.

13. A SIM card as recited in one of claims 9-12, wherein the SIM card comprises a function for digitally signing the data data package.

## Revendications (Revendications pour l'(les) Etat(s) contractant(s) suivant(s): AT, BE, BG, CH, CY, CZ, DE, DK, EE, ES, FI, FR, GR, HU, IE, IS, IT, LI, LU, MC, NL, PL, PT, RO, SE, SI, SK, TR)

1. Procédé d'authentification d'un utilisateur au moyen du profil de sa voix, lequel procédé comporte les étapes suivantes consistant à :
- établir une liaison vocale par le biais d'un réseau de téléphonie mobile ;
- enregistrer un échantillon de la voix de l'utilisateur au moyen d'un microphone d'un dispositif terminal mobile ;
- transmettre à un serveur l'échantillon de voix de manière asynchrone à la parole sous forme d'au moins un paquet de données particulier par le biais du réseau de téléphonie mobile ;
- vérifier l'échantillon de voix par le biais du serveur.

2. Procédé selon la revendication 1, dans lequel le paquet de données particulier est généré à l'aide d'une fonction d'enregistrement de voix mise en oeuvre dans le dispositif terminal.

3. Procédé selon l'une quelconque des revendications précédentes, dans lequel l'échantillon de voix est envoyé sous forme de message de service de messagerie multimédia (MMS).

4. Procédé selon l'une quelconque des revendications précédentes, dans lequel l'enregistrement et la transmission de l'échantillon de voix sont commandés au moyen de la carte SIM du dispositif terminal.

5. Procédé selon l'une quelconque des revendications précédentes, dans lequel l'enregistrement et la transmission de l'échantillon de voix commencent après que le serveur s'est authentifié vis-à-vis du dispositif terminal ou de la carte SIM et qu'il a ordonné l'enregistrement et la transmission de l'échantillon de voix.

6. Procédé selon l'une quelconque des revendications précédentes, dans lequel le paquet de données reçoit une signature numérique avant sa transmission.

7. Procédé selon l'une quelconque des revendications précédentes, dans lequel l'envoi de l'échantillon de voix sous forme du paquet de données a lieu dans le temps parallèlement au dialogue poursuivi entre le serveur et l'utilisateur.

8. Procédé selon l'une quelconque des revendications précédentes, dans lequel, pour l'enregistrement de l'échantillon de voix par le serveur, l'utilisateur est invité à fournir une expression qui est choisie parmi un grand nombre d'expressions possibles sans l'immixtion de l'utilisateur.

9. Carte SIM pour un téléphone mobile, laquelle contient un programme de commande qui est actif pour effectuer les étapes suivantes consistant à :
- établir une liaison vocale par le biais d'un réseau de téléphonie mobile ;
- enregistrer un échantillon de voix de l'utilisateur du téléphone mobile au moyen d'un microphone du téléphone mobile ;
- transmettre à un serveur l'échantillon de voix de manière asynchrone à la diction sous forme d'au moins un paquet de données particulier par le biais du réseau de téléphonie mobile.

10. Carte SIM selon la revendication 9, dans laquelle la génération du paquet de données particulier est prévue à l'aide d'une fonction d'enregistrement de voix mise en oeuvre dans le téléphone mobile.

11. Carte SIM selon l'une quelconque des revendications 9 à 10, dans laquelle la transmission de l'échantillon de voix est prévue en tant que message de service de messagerie multimédia (MMS).

12. Carte SIM selon l'une quelconque des revendications 9 à 11, dans laquelle le programme de commande est activable par l'authentification du serveur vis-à-vis de la carte SIM et par un ordre subséquent d'enregistrement et de transmission de l'échantillon de voix.

13. Carte SIM selon l'une quelconque des revendications 9 à 12, dans laquelle la carte SIM comporte une fonction pour signer numériquement le paquet de données.

## Revendications (Revendications pour l'(les) Etat(s) contractant(s) suivant(s): GB)

1. Procédé d'authentification d'un utilisateur au moyen du profil de sa voix dans le cadre d'un dialogue vocal, lequel procédé comporte les étapes suivantes consistant à :
- établir une liaison vocale par le biais d'un réseau de téléphonie mobile ;
- enregistrer un échantillon de la voix de l'utilisateur au moyen d'un microphone d'un dispositif terminal mobile ;
- transmettre à un serveur l'échantillon de voix de manière asynchrone à la parole sous forme d'au moins un paquet de données particulier par le biais du réseau de téléphonie mobile ;
- vérifier l'échantillon de voix par le biais du serveur.

2. Procédé selon la revendication 1, dans lequel le paquet de données particulier est généré à l'aide d'une fonction d'enregistrement de voix mise en oeuvre dans le dispositif terminal.

3. Procédé selon l'une quelconque des revendications précédentes, dans lequel l'échantillon de voix est envoyé sous forme de message de service de messagerie multimédia (MMS).

4. Procédé selon l'une quelconque des revendications précédentes, dans lequel l'enregistrement et la transmission de l'échantillon de voix sont commandés au moyen de la carte SIM du dispositif terminal.

5. Procédé selon l'une quelconque des revendications précédentes, dans lequel l'enregistrement et la transmission de l'échantillon de voix commencent après que le serveur s'est authentifié vis-à-vis du dispositif terminal ou de la carte SIM et qu'il a ordonné l'enregistrement et la transmission de l'échantillon de voix.

6. Procédé selon l'une quelconque des revendications précédentes, dans lequel le paquet de données reçoit une signature numérique avant sa transmission.

7. Procédé selon l'une quelconque des revendications précédentes, dans lequel l'envoi de l'échantillon de voix sous forme du paquet de données a lieu dans le temps parallèlement au dialogue poursuivi entre le serveur et l'utilisateur.

8. Procédé selon l'une quelconque des revendications précédentes, dans lequel, pour l'enregistrement de l'échantillon de voix par le serveur, l'utilisateur est invité à fournir une expression qui est choisie parmi un grand nombre d'expressions possibles sans l'immixtion de l'utilisateur.

9. Carte SIM pour un téléphone mobile, laquelle contient un programme de commande qui est actif pour effectuer les étapes suivantes consistant à :
- établir une liaison vocale par le biais d'un réseau de téléphonie mobile ;
- enregistrer un échantillon de voix de l'utilisateur du téléphone mobile au moyen d'un microphone du téléphone mobile dans le cadre d'un dialogue vocal ;
- transmettre à un serveur l'échantillon de voix de manière asynchrone à la diction sous forme d'au moins un paquet de données particulier par le biais du réseau de téléphonie mobile.

10. Carte SIM selon la revendication 9, dans laquelle la génération du paquet de données particulier est prévue à l'aide d'une fonction d'enregistrement de voix mise en oeuvre dans le téléphone mobile.

11. Carte SIM selon l'une quelconque des revendications 9 à 10, dans laquelle la transmission de l'échantillon de voix est prévue en tant que message de service de messagerie multimédia (MMS).

12. Carte SIM selon l'une quelconque des revendications 9 à 11, dans laquelle le programme de commande est activable par l'authentification du serveur vis-à-vis de la carte SIM et par un ordre subséquent d'enregistrement et de transmission de l'échantillon de voix.

13. Carte SIM selon l'une quelconque des revendications 9 à 12, dans laquelle la carte SIM comporte une fonction pour signer numériquement le paquet de données.
